# EUROPÄISCHE PATENTSCHRIFT

(11) **EP 0 752 973 B1**
(45) Veröffentlichungstag und Bekanntmachung des Hinweises auf die Patenterteilung: **04.03.1998**
(21) Anmeldenummer: 95917305.5
(22) Anmeldetag: 10.04.1995
(51) Int. Cl.: B65G 47/61

(54) **HÄNGEFÖRDERANLAGE**
SUSPENSION CONVEYOR SYSTEM
INSTALLATION DE TRANSPORT SUSPENDUE

(30) Priorität: 12.04.1994 DE 9406059 U
(43) Veröffentlichungstag der Anmeldung: 15.01.1997
(73) Patentinhaber: MTS MODULARE TRANSPORT SYSTEME GMBH, 6130 Vomp (AT)
(72) Erfinder: ENDERLEIN, Robby, D-86899 Landsberg am Lech (DE); ROBU, Johann, D-82140 Olching (DE); GEIGER, Hansjörg, A-6130 Schwaz (AT)
(74) Vertreter: Viering, Jentschura & Partner
(86) Internationale Anmeldenummer: EP9501305
(87) Internationale Veröffentlichungsnummer: WO9527674

(56) Entgegenhaltungen:
- DE-A- 1 937 491
- FR-A- 2 670 190

## Beschreibung

Die Erfindung betrifft eine Hängeförderanlage nach dem Oberbegriff des Patentanspruchs 1.

Eine derartige Hängeförderanlage ist beispielsweise aus der EP 0 582 047 bekannt. Diese Hängeförderanlage weist eine Mehrzahl von Rollapparaten auf, die mit Aufnahmehaken versehen sind, die Kleiderbügel aufnehmen können. Jedoch stellt das Be- und Entladen ein Problem dar, weil die Kleiderbügel dazu in den Haken gehoben bzw. aus dem Haken wieder herausgehoben werden müssen.

Durch die Erfindung wird das Problem gelöst, wie eine Hängeförderanlage der eingangs erwähnten Art so ausgebildet werden kann, daß ein möglichst einfaches selbsttätiges Be- und Entladen der Lastgehänge der Rollapparate erzielt werden kann.

Dies wird gemäß der Erfindung durch die Merkmale im kennzeichnenden Teil des Anspruchs 1 erreicht. Vorteilhafte Weiterbildungen sind in den Unteransprüchen beschrieben.

Wenn die Lastgehänge mit Kleiderbügeln beladen werden sollen, die an der Schiene hängen, wird das leere Lastgehänge eines ankommenden Rollapparates an der Auflauframpe bis in die Aufschwenklage nach hinten geschwenkt, wonach die Gleitrampe des aufgeschwenkten Lastgehänges die Kleiderbügelhaken auf der Schiene übergleitet und das freie Ende des Hakenabschnittes im Abstand über der Schiene die Kleiderbügelhaken überfährt, bis das Lastgehänge hinter dem letzten Kleiderbügelhaken bis zum Aufliegen der Gleitrampe auf der Schiene zurückschwenkt. Durch das zurückschwenken des Lastgehänges wird auch das freie Ende des Hakenabschnittes bis zum Auftreffen auf der Schiene abgesenkt, so daß das freie Ende des Hakenabschnittes den letzten Kleiderbügel mitnimmt, wenn dieser in der Durchgangsöffnung des Aufnahmehakens zu liegen gekommen ist, und diesen Kleiderbügel auf der Schiene bis zu deren vorderen Ende mitzieht. Dort wird die Gleitrampe des Lastgehänges von der Schiene für das weitere Zurückschwenken des Lastgehänges nach unten freigegeben, so daß die Gleitrampe und der Hakenabschnitt in die Längsausnehmung der Schiene eintauchen und den mitgezogenen Kleiderbügelhaken untergreifen, der desweiteren dann in den Aufnahmehaken hineinrutscht und dann hinter der Schiene frei an dem Aufnahmehaken hängt.

Umgekehrt rutscht ein Kleiderbügelhaken, der in einem Aufnahmehaken des Lastgehänges eines an der Auflauframpe der Schiene ankommenden Rollapparates hängt, durch das Verschwenken des Lastgehänges in die Aufschwenklage an dem in dieser Lage leicht schräg nach unten abfallenden Hakenabschnitt ab, bis er in der Durchgangsöffnung zu liegen kommt und von dem freien Ende des Hakenabschnittes auf der Schiene mitgezogen wird, bis die Gleitrampe an bereits auf der Schiene abgelegten und dort angestauten Kleiderbügelhaken oder einem auf die Schiene verstellten Ausheber ankommt, wodurch das Lastgehänge weiter aufgeschwenkt wird und den vorher mitgezogenen Kleiderbügelhaken freigibt.

Die Belade/Entladestation kann an einer über Weichen mit dem Schienensystem der Hängeförderanlage verbundenen Nebenstrecke angeordnet sein.

Vorzugsweise ist das von der Durchgangsöffnung begrenzte freie Ende des Hakenabschnitts als nach außen schräg abgewinkelter Schnabel ausgebildet ist, der daher den aus Runddraht bestehenden Kleiderbügelhaken bereits auf der Schiene etwas untergreifen kann. Außerdem kann eine Rückstellfeder vorgesehen sein, die das Lastgehänge in dessen Aufschwenklage nach unten drückt.

Die Längsausnehmung am in Förderrichtung hinteren Ende der Schiene als nach unten offener Schlitz ausgebildet sein. Bevorzugt weist die Längsausnehmung jedoch einen in Förderrichtung schräg abfallenden Gleitboden auf. Hierdurch wird das Lastgehänge beim Ankommen des freien Endes des Hakenabschnittes an der Längsausnehmung nicht abrupt, sondern allmählich abgeschwenkt. Dies hat für das Beladen des Aufnahmehakens mit einem Kleiderbügelhaken zur Folge, daß dieser sanft und stoßfrei aufgenommen wird. Für ein leeres Lastgehänge hingegen bedeutet dessen allmähliches Abschwenken, daß das voll abgeschwenkte Lastgehänge nicht wesentlich durchpendelt.

Die Erfindung eignet sich nicht nur für einzeln geförderte Rollapparate, bei denen das Lastgehänge unmittelbar am unteren Ende des Rollapparates angebracht ist, sondern insbesondere auch für Tandemtrolleys, bei denen zwei Rollapparate über eine Laststange miteinander verbunden sind, an der mehrere erfindungsgemäße Lastgehänge schwenkbar aufgehängt sind. In diesem Fall haben die Lastgehänge einen solchen Abstand voneinander, daß sie nicht miteinander kollidieren, wenn sie nach oben geschwenkt werden. Das Be- und Entladen der Lastgehänge erfolgt in der oben beschriebenen Weise nacheinander.

Die Erfindung wird anhand von Ausführungsformen erläutert, die wenigstens schematisch aus der Zeichnung ersichtlich sind. In der Zeichnung zeigt Fig. 1 eine erfindungsgemäße Belade/Entladestation beim Entladen der Lastgehänge der Rollapparate, Fig. 2 die Belade/Entladestation beim Beladen der Lastgehänge der Rollapparate mit Kleiderbügeln, Fig. 3 die Belade/Entladestation beim aufeinanderfolgenden Entladen einer Mehrzahl von Lastgehängen von miteinander gekuppelten Tandemtrollys, und Fig. 4 die Belade/Entladestation beim aufeinanderfolgenden Beladen einer Mehrzahl von Lastgehängen von miteinander gekuppelten Tandemtrolleys.

Die Hängeförderanlage weist ein Schienensystem 15 auf, auf dem Rollapparate 1 mithilfe von nicht gezeigten Mitnehmern gefördert werden. Die Rollapparate weisen an ihrem unteren Ende ein Lasttragmittel 16 zum Abstützen eines Lastgehänges 2 auf, das an dem Rollapparat 1 um eine senkrecht zur Förderrichtung verlaufende Achse 7 schwenkbar ist. An dem Lastgehänge 2 ist ein Aufnahmehaken 3 zur Aufnahme eines Kleiderbügelhakens 4 ausgebildet. An der in Förderrichtung, die in den Figuren nach links angenommen wird, vorlaufenden Seite des Aufnahmehakens 3 weist dieser einen aufwärts und wenigstens an seiner Innenseite nach außen zu leicht schräg verlaufenden Hakenabschnitt 5 auf, der an seinem freien Ende, das von einer Durchgangsöffnung 6 begrenzt wird, in einen nach außen abgewinkelten Schnabel 12 ausläuft. Über der Durchgangsöffnung 6 ist eine Gleitrampe ausgebildet.

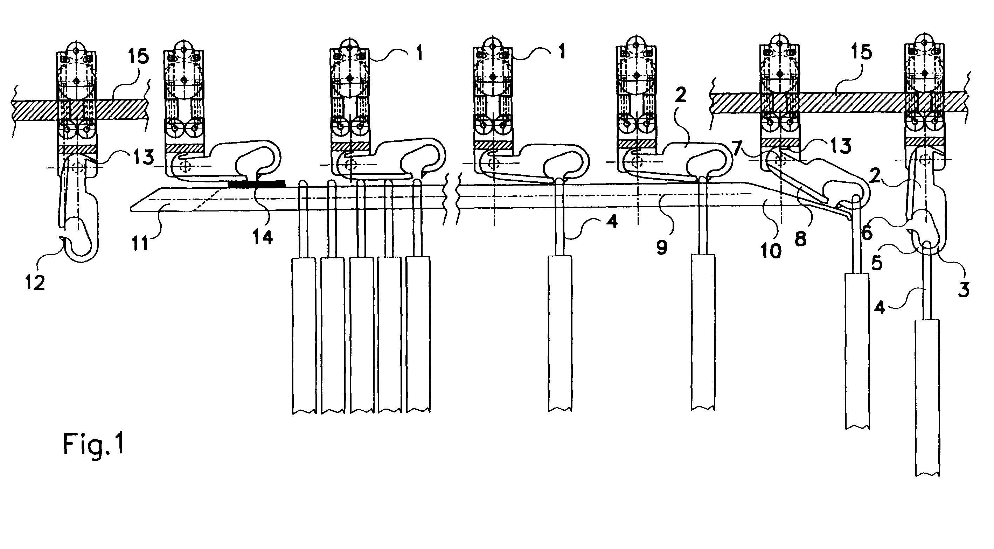

An der aus der Zeichnung ersichtlichen Belade/Entladestation ist eine parallel zur Förderrichtung verlaufende horizontale Schiene 9 im Weg der Lastgehänge 2 der Rollapparate 1 angeordnet. An der Schiene 9 können Kleiderbügel mit ihren Kleiderbügelhaken 4 aufgehängt werden. Am in Förderrichtung vorderen Ende der Schiene ist eine schräg nach oben verlaufende Auflauframpe 10 ausgebildet, an der die Gleitrampen der ankommenden Rollapparate 1 anlaufen, wodurch das jeweilige Lastgehänge 2 nach hinten in seine Aufschwenklage geschwenkt wird. Am hinteren Ende der Schiene 9 ist diese in Längsrichtung gabelförmig, so daß zwischen den Gabelschenkeln eine schlitzförmige Längsausnehmung 11 gebildet wird, die nach oben und nach vorn offen ist. Auf die Schiene 9 kann nach Fig. 1 ein plattenförmiger Ausheber 14 verstellt werden, auf den das jeweilige Lastgehänge 2 aufläuft und der als Anschlag wirkt, an dem auf der Schiene mitgenommene Kleiderbügelhaken 4 angestaut werden.

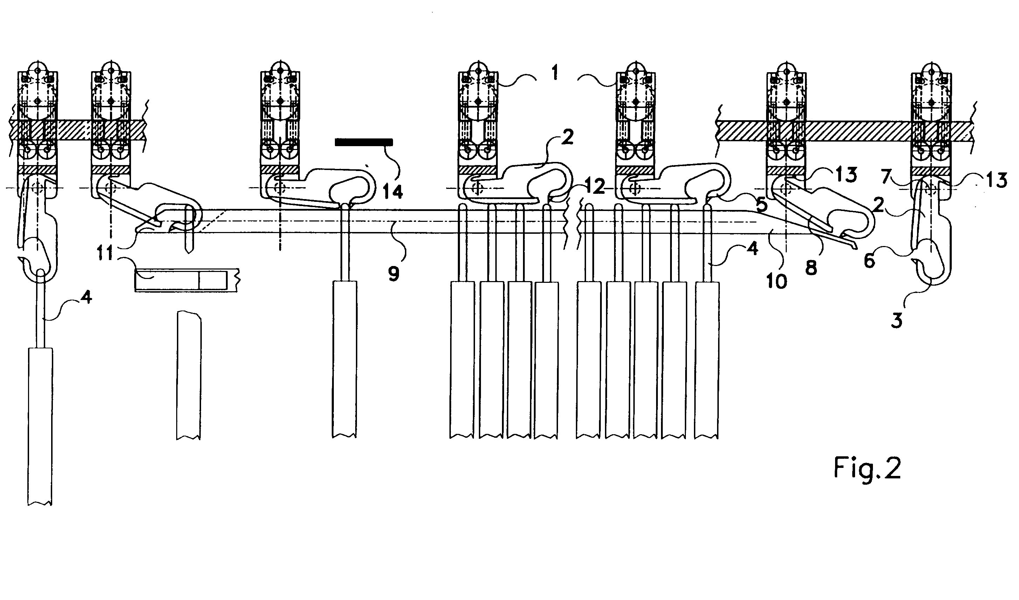

Fig. 1 zeigt das Absetzen von in den Aufnahmehaken 3 der Lastgehänge 2 der Rollapparate 1 aufgehängten Kleiderbügelhaken 4 auf die Schiene 9. Das von rechts in der Figur an der Auflauframpe 10 ankommende Lastgehänge 2 wird an dieser zunächst leicht nach hinten geschwenkt und hebt dadurch den Kleiderbügelhaken 4 auf die Auflauframpe 10. Hinter der Auflauframpe 10 wird das Lastgehänge 2 von der Schiene 9 gegen die Kraft einer Rückstellfeder 13, die in der Ausführungsform nach den Fig. 1 und 2 als federnder Ansatz des Lastgehänges 2 ausgebildet ist, weiter nach oben geschwenkt, wodurch der Kleiderbügelhaken 4 an dem nun leicht schräg nach unten verlaufenden Hakenabschnitt 5 nach unten in die Durchgangsöffnung 6 und auf die Schiene 9 rutscht. Im weiteren wird der Kleiderbügelhaken 4 von dem Schnabel 12 des Aufnahmehakens 3 über die Schiene 9 gezogen, bis die Gleitrampe 8 auf mittels der Stopplatte 14 auf der Schiene angestauten anderen Kleiderbügelhaken 4 aufläuft. Hierdurch wird das Lastgehänge 2 noch etwas weiter nachoben geschwenkt, so daß der Schnabel 12 des Aufnahmehakens 3 den angeförderten Kleiderbügelhaken 4 freigibt. Im weiteren gleitet die Gleitrampe über die angestauten Kleiderbügelhaken und den auf die Schiene verstellten Ausheber 14, bis er vom hinteren Ende der Schiene 9 freigekommen ist.

Der in der aufgeschwenkten Lage des Lastgehänges 2 auf der Schiene 9 aufliegende unterste Teil des Lastgehänges 2 der Gleitrampe 8 und das im Ausführungsbeispiel vom freien Ende des Schnabels 12 gebildete freie Ende des Hakenabschnittes 5 sind somit relativ zueinander derart angeordnet, daß beide in Berührungskontakt mit der von Hindernissen freien Schiene 9 sind, wenn dies für die Gleitrampe 8 der Fall ist, und daß das freie Ende des Hakenabschnittes 5 um mehr als die Dicke der Kleiderbügelhaken 4 bzw. den Abstand der Scheitel der Kleiderbügelhaken 4 von der Oberseite der Schiene 9 von dieser Oberseite abgehoben ist, wenn die Gleitrampe 8 einen Kleiderbügelhaken 4 oder den Ausheber 14 übergleitet. Letztere Bedingung muß in jedem Fall erfüllt sein, wohingegen die erstere Bedingung nicht erfüllt sein muß, wenn die Schiene 9 einen Schlitz oder an ihrer Oberseite eine Längsnut aufweist, in welche das freie Ende des Hakenabschnittes 5 beim Aufliegen der Gleitrampe 8 auf der Oberseite der Schiene 9 eintaucht. Dies kann für das Mitnehmen des Kleiderbügelhakens 4 durch das freie Ende des Hakenabschnittes vorteilhaft sein.

Aus Fig. 2 ist das selbsttätige Aufnehmen eines Kleiderbügelhakens 4 in dem Aufnahmehaken 3 des Lastgehänges 2 eines Rollapparates 1 ersichtlich. Auch hier wieder wird das Lastgehänge 2 von der Auflauframpe 10 der Schiene 9 nach hinten hochgeschwenkt. Seine Gleitrampe 8 übergleitet dann die auf der Schiene 9 hängenden Kleiderbügelhaken 4, bis sie hinter dem letzten derselben freikommt und dadurch etwas nach unten bis zum Auftreffen auf die Schiene 9 schwenkt, so daß dieser Kleiderbügelhaken 4 in der Durchgangsöffnung 6 zu liegen kommt und der Schnabel 12 des Aufnahmehakens 3 auf die Schiene 9 auftrifft. In der Folge wird dann der Kleiderbügelhaken 4 bis über die Längsausnehmung 11 am hinteren Ende der Schiene gezogen. Hierdurch schwenkt das Lastgehänge 2 weiter nach unten, weil die Gleitrampe 8 und der Hakenabschnitt 5 in die Längsausnehmung 11 eintauchen und der Hakenabschnitt 5 unter den Kleiderbügelhaken 4 geschwenkt wird. Sodann wird dieser von dem Aufnahmehaken 3 von der Schiene heruntergezogen und kann von dem Rollapparat 1, dessen Lastgehänge 2 nun wieder vollständig nachuntengeschwenkt ist, abtransportiert werden.

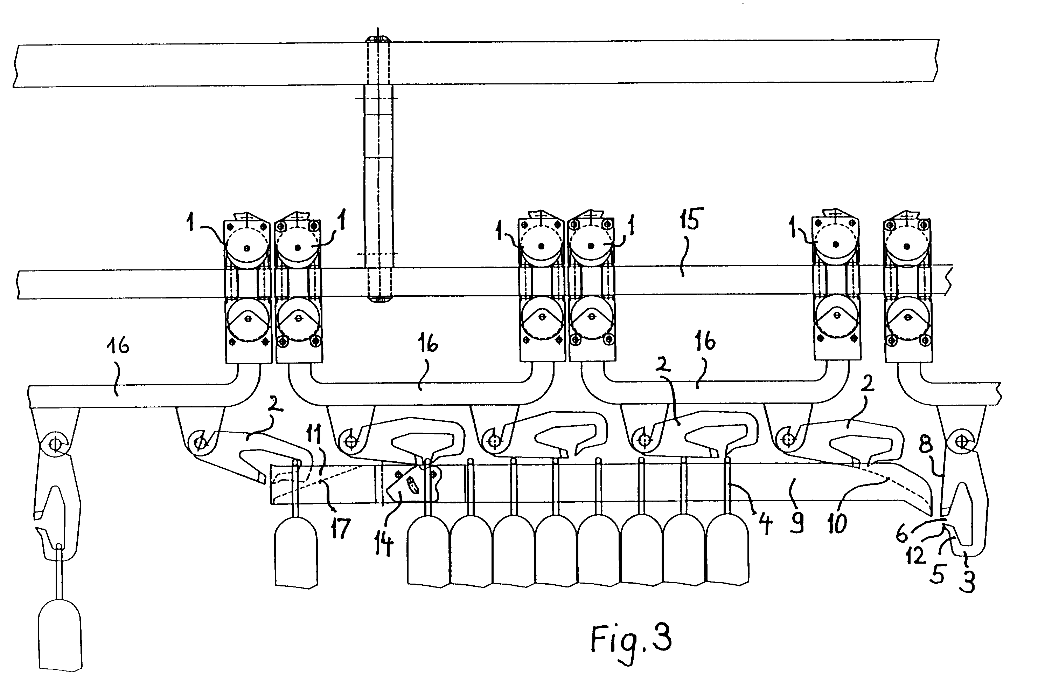

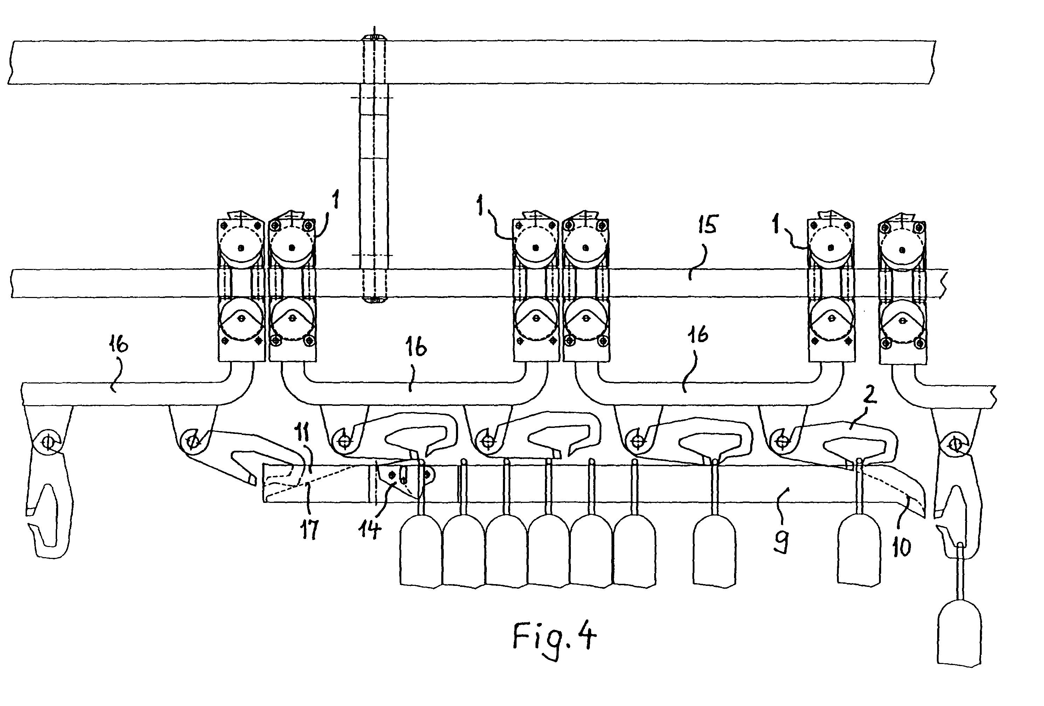

Bei der Ausführungsform aus den Fig. 3 und 4 wird das Lasttragmittel 16 von einer horizontalen Laststange gebildet, die von zwei Rollapparaten 1 unter Ausbildung eines Tandemtrolleys getragen wird. An dieser Laststange sind mehrere Lastgehänge 2 schwenkbar aufgehängt. Wie in den Fig. 3 und 4 dargestellt, läuft das Beladen und Entladen der Lastgehänge mit Kleiderbügelhaken 4 wie bei der Ausführungsform aus den Fig. 1 und 2 ab.

Weiter ist bei der Ausführungsform aus den Fig. 3 und 4 die Längsausnehmung 11 nicht als vertikaler Schlitz, sondern als Nut mit einem in Förderrichtung schräg abfallenden Gleitboden 17 ausgestaltet, so daß das Nachuntenschwenken des Lastgehänges 2 durch das Zusammenwirken des Aufnahmehakens 3 und des Gleitbodens 17 gesteuert allmählich erfolgt. Ferner ist nach den Fig. 3 und 4 der Ausheber 14 als Schwenkplatte ausgebildet, die in der Schiene 9 ausgebildet ist und mittels eines Antriebs (nicht gezeigt), wie eines Hubzylinders oder Hubmagneten, gesteuert wahlweise vollständig in die Schiene 9 versenkt (Fig. 3) oder etwas über deren Oberseite herausgeschwenkt werden kann (Fig. 4), um als Anschlag für das Anstauen der Kleiderbügelhaken 4 zu wirken und das freie Ende des Hakenabschnitts 5 des jeweiligen Lastgehänges 2 an seiner Gleitrampe 8 aus dem Eingriff mit dem anzustauenden Kleiderbügelhaken zu heben.

Anstatt die Auflauframpe 10 vorzusehen, ist es auch möglich, die Schienenbahn für die Rollapparate 1 im Bereich der Belade/Entladestation abzusenken.

## Patentansprüche

1. Hängeförderanlage mit einer Mehrzahl von auf einem Schienensystem verfahrbaren Rollapparaten (1), die am unteren Ende ein Lasttragmittel (16) mit einem Lastgehänge (2) mit einem Aufnahmehaken (3) zur Aufnahme eines Kleiderbügelhakens (4) aufweisen, wobei der Aufnahmehaken (3) an seiner in Förderrichtung vorlaufenden Seite einen aufwärts verlaufenden Hakenabschnitt (5) aufweist, der nach oben hin von einer Durchgangsöffnung (6) begrenzt ist, dadurch gekennzeichnet, daß das Lastgehänge (2) an dem Lasttragmittel (16) um eine senkrecht zur Förderrichtung verlaufende horizontale Achse (7) entgegen der Förderrichtung bis in eine Aufschwenklage schwenkbar angelenkt ist, in welcher die Durchgangsöffnung (6) nach unten gerichtet ist, und an dem Lastgehänge (2) an der dem aufwärts verlaufenden Hakenabschnitt (5) entgegengesetzten Seite der Durchgangsöffnung (6) eine Gleitrampe (8) ausgebildet ist, und daß eine Belade/Entladestation mit einer parallel zur Förderrichtung im Weg der Lastgehänge (2) verlaufenden Schiene (9) vorgesehen ist, an der die Kleiderbügelhaken (4) aufhängbar sind und die an ihrem der Förderrichtung entgegengesetzten Ende eine mit der Gleitrampe (8) zum Aufschwenken des jeweiligen Lastgehänges (2) in die Aufschwenklage zusammenwirkende Auflauframpe (10), und an ihrem in Förderrichtung weisenden Ende eine nach oben und in Förderrichtung offene Längsausnehmung (11) aufweist, die derart gestaltet ist, daß die Gleitrampe (8) und der Hakenabschnitt (5) in die Längsausnehmung (11) eintauchen können.

2. Hängeförderanlage nach Anspruch 1, dadurch gekennzeichnet, daß das von der Durchgangsöffnung (12) begrenzte freie Ende des Hakenabschnitts (5) als nach außen abgewinkelter Schnabel (12) ausgebildet ist.

3. Hängeförderanlage nach Anspruch 1 oder 2, dadurch gekennzeichnet, daß an dem Lastgehänge (2) in der Aufschwenklage eine Rückstellfeder (13) angreift.

4. Hängeförderanlage nach einem der Ansprüche 1 bis 3, dadurch gekennzeichnet, daß an der Belade/Entladestation ein Ausheber (14) vorgesehen ist, der gesteuert in den Weg der Lastgehänge (2) verstellbar ist und in dieser Verstellage von der Gleitrampe (8) der Lastgehänge (2) übergleitbar ist.

5. Hängeförderanlage nach einem der Ansprüche 1 bis 4, dadurch gekennzeichnet, daß in der Oberseite der Schiene (9) eine Längsnut ausgebildet ist, in welche das freie Ende des Hakenabschnittes (5) eintauchen kann.

6. Hängeförderanlage nach einem der Ansprüche 1 bis 5, dadurch gekennzeichnet, daß die Längsausnehmung (11) einen in Förderrichtung schräg abfallenden Gleitboden (17) aufweist.

7. Hängeförderanlage nach einem der Ansprüche 1 bis 6, dadurch gekennzeichnet, daß das Lasttragmittel (16) als von zwei Rollapparaten (1) getragene horizontale Stange ausgebildet ist, an der mehrere nach einem der Ansprüche 1 bis 3 gestaltete Lastgehänge (2) in einem solchen Abstand voneinander schwenkbar aufgehängt sind, der größer ist als die zwischen der Achse (7) und dem dieser abgewandten Ende des Lastgehänges (2) gemessene Länge desselben.

## Claims

1. Suspension conveyor system comprising a plurality of trolleys (1) moveable on a rail system, said trolleys (1) having at their lower ends a load carrying means (16) with a load receiving means (2) having a receiving hook (3) for receiving a clothing hanger hook (4), wherein the receiving hook (3) comprises at its side forwardly extending in the conveying direction an upwardly extending hook portion (5) which is confined in the upwards direction by a through aperture (6), characterized in that the load receiving means (2) on the load carrying means (16) is pivotable in opposite direction in relation to the conveying direction into an upwardly pivoted position around a horizontal axis (7) extending perpendicularly to the conveying direction, wherein said through aperture (6) is directed downwards in this upwardly pivoted position, and a slide ramp (8) is formed at the load receiving means (2) at the side of the through aperture (6) opposite to the upwardly extending hook portion (5), and that a charging/discharging station is provided with a rail (9) extending in parallel to the conveying direction in the path of the load receiving means (2), so that the clothing hanger hooks (4) can be suspended from said rail (9) which comprises on its end opposite to the conveying direction a guiding ramp (10) interacting with the slide ramp (8) for pivoting up the respective load receiving means (2) into the upwardly pivoted position, and on its end pointing towards the conveying direction a longitudinal recess (11) which is open in the upwards direction and the conveying direction, said longitudinal recess being formed such a manner that the slide ramp (8) and the hook portion (5) can enter into the longitudinal recess (11).

2. Suspension conveyor system according to claim 1, characterized in that the free end of the hook portion (5), said free end being confined by the through aperture (12), is formed as a beak which is bent outwardly.

3. Suspension conveyor system according to claim 1 or 2, characterized in that a position-back spring (13) exerts on the load receiving means (2) in the upwardly pivoted position.

4. Suspension conveyor system according to one of claims 1 to 3, characterized in that a lifter (14) is provided at the charging/discharging station, said lifter being adjustable into the way of the load receiving means (2) in a controlled manner and can be overslid by the slide ramp (8) of the load receiving means (2) in this adjusted position.

5. Suspension conveyor system according to one of claims 1 to 4, characterized in that a longitudinal groove is provided in the upper side of the rail (9), wherein the free end of the hook portion (5) can enter into said groove.

6. Suspension conveyor system according to one of claims 1 to 5, characterized in that the longitudinal recess (11) comprises a slide bottom (17) which slopes downwardly in the conveying direction.

7. Suspension conveyor system according to one of claims 1 to 6, characterized in that the load carrying means (16) is formed as a horizontal bar supported by two trolleys (1), wherein several load receiving means (2) formed according to one of claims 1 to 3 are pivotably suspended from said horizontal bar in such a distance from each other which is larger than the length of the load receiving means (2), said length being measured between the axis (7) and the end of the load receiving means (2), said end being opposite to said axis (7).

## Revendications

1. Installation de transport suspendue comportant une multiplicité d'appareils roulants (1) déplaçables sur un système de rails et qui comportent, à leur extrémité inférieure, des moyens de support de charge (16) comportant un organe de suspension de charge (2) pourvu d'un crochet de réception (3) servant à recevoir un crochet (4) d'un cintre, dans laquelle le crochet de réception (3) possède, sur son côté tourné vers l'avant dans la direction de déplacement, une partie montante (5) qui est limitée vers le haut par une ouverture de passage (6), caractérisée en ce que l'organe de suspension de charge (2) est articulé sur les moyens de support de charge (16) de manière à pouvoir pivoter en sens opposé à la direction de transport, jusque dans une position basculée relevée, dans laquelle l'ouverture de passage (6) est dirigée vers le bas, autour d'un axe horizontal (7), qui s'étend perpendiculairement à la direction de transport, et une rampe de glissement (8) est formée sur l'organe de suspension de charge (2), du côté de l'ouverture de passage (6) tourné à l'opposé de la partie montante (5) du crochet, et qu'il est prévu un poste de chargement/déchargement comportant un rail (9), qui s'étend parallèlement à la direction de transport sur le trajet de l'organe de suspension de charge (2) et sur lequel peuvent être suspendus les crochets (4) des cintres et qui comporte, au niveau de son extrémité tournée à l'opposé du sens de transport, une rampe de montée (10) qui coopère avec la rampe de glissement (8) pour faire pivoter l'organe de suspension de charge respectif (2) pour l'amener dans la position pivotée relevée, et comporte, au niveau de son extrémité tournée dans la direction de transport, un évidement longitudinal (11) ouvert vers le haut et dans la direction de transport et agencé de telle sorte que la rampe de glissement (8) et la partie (5) du crochet peuvent s'engager dans l'évidement longitudinal (11).

2. Installation de transport suspendue selon la revendication 1, caractérisée en ce que l'extrémité libre, limitée par l'ouverture de passage (12), de la partie (5) du crochet est agencée sous la forme d'un bec (12) recourbé vers l'extérieur.

3. Installation de transport suspendue selon la revendication 1 ou 2, caractérisée en ce qu'un ressort de rappel (13) attaque l'organe de suspension de charge (2) dans la position basculée relevée.

4. Installation de transport suspendue selon l'une des revendications 1 à 3, caractérisée en ce que dans le poste de chargement/déchargement est prévu un dispositif de soulèvement (14), qui peut être appliqué d'une manière commandée dans le trajet des organes de suspension de charge (2), la rampe de glissement (8) de l'organe de suspension de charge (2) pouvant glisser au-dessus de ce dispositif de soulèvement situé dans cette position appliquée.

5. Installation de transport suspendue selon l'une des revendications 1 à 4, caractérisée en ce que dans la face supérieure du rail (9) est formée une rainure longitudinale, dans laquelle peut s'engager l'extrémité libre de la partie (5) du crochet.

6. Installation de transport suspendue selon l'une des revendications 1 à 5, caractérisée en ce que l'évidement longitudinal (11) possède un fond de glissement (17), qui descend obliquement dans la direction de transport.

7. Installation de transport suspendue selon l'une des revendications 1 à 6, caractérisée en ce que les moyens de support de charge (16) sont agencés sous la forme de deux barres horizontales portées par deux appareils roulants (1) et sur lesquelles plusieurs organes de suspension de charge (2) agencés conformément à l'une des revendications 1 à 3, sont suspendus de manière à pouvoir pivoter, à une distance réciproque qui est supérieure à la longueur de l'organe de suspension de charge (2), mesurée entre l'axe (7) et l'extrémité, située à l'opposé de cet axe, de cet organe de suspension de charge.
